# EUROPÄISCHE PATENTSCHRIFT

(11) **EP 3 436 211 B1**
(45) Veröffentlichungstag und Bekanntmachung des Hinweises auf die Patenterteilung: **24.03.2021**
(21) Anmeldenummer: 17715120.6
(22) Anmeldetag: 31.03.2017
(51) Int. Cl.: B23D 77/00

(54) **REIBAHLENWERKZEUG MIT FÜHRUNGSFASE**
REAMER TOOL WITH GUIDE BEVEL
OUTIL D'ALÉSOIR AVEC LISTEL

(30) Priorität: 31.03.2016 DE 102016105929
(43) Veröffentlichungstag der Anmeldung: 06.02.2019
(73) Patentinhaber: Gühring KG, 72458 Albstadt (DE)
(72) Erfinder: SCHANZ, Gerhard, 72393 Burladingen (DE)
(74) Vertreter: Gleim, Christian Ragnar
(86) Internationale Anmeldenummer: PCT/EP2017/057740
(87) Internationale Veröffentlichungsnummer: WO 2017/167984

(56) Entgegenhaltungen:
- EP-A1- 0 888 842
- DE-A1-102008 027 945
- DE-C2- 3 404 005
- DE-U1- 20 319 341
- US-A1- 2002 102 141

## Beschreibung

Die Erfindung betrifft ein Reibahlenwerkzeug für eine spanende Feinbearbeitung von Werkstücken gemäß dem Oberbegriff des Anspruchs 1. Ein solches Reibahlenwerkzeug ist aus DE 203 19 341 U1 bekannt.

### STAND DER TECHNIK

Aus dem Stand der Technik ist eine Vielzahl von Reibahlenwerkzeuge zur Feinbearbeitung von Werkstücken bekannt.

Gattungsgemäße Reibahlenwerkzeuge weisen eine Hauptschneide und eine Nebenschneide, die auch als Führungsschneide bezeichnet wird, auf, wobei die Hauptschneide die Feinbearbeitung einer Ausnehmung eines Werkstücks vornimmt, insbesondere eine Reibbearbeitung, und die Nebenschneide zum Führen des Werkzeugs in der Ausnehmung dient. Die Schneide ist in der Regel als Kante zwischen einer Schneidenflanke und einer Spanflächenführungsflanke ausgebildet, wobei die Schneide eine oder mehrere Freiflächen, die durch sogenannte Freiwinkel gegenüber der Schneidkante abgewinkelt sind, definiert werden. Die Freiflächen folgen einem gegenüber dem Radius des Reibahlenwerkzeugs verkürzten Radius und können derart eine Werkstückoberfläche nicht berühren. Die Freiflächen sind somit Flächen, die nicht tangential zur kreisförmigen Bewegung des Reibahlenwerkzeugs ausgerichtet sind, sondern einem verkürzten Radius folgen, und somit von der zu bearbeitenden Wandung des Werkstücks wegstreben.

Beispielsweise ist in der DE 16 27 222 A ein Reibahlenwerkzeug bekannt, das eine Hauptschneide und eine Führungsschneide aufweist, wobei die Hauptschneide zur Führungsschneide abgewinkelt ist und bildet einen Einstell- oder Anschnittwinkel, sodass keine Vorschubriefen auf der Oberfläche der herzustellenden Bohrung zurückbleiben. Es wird dabei vorgeschlagen, den Verlauf der Hauptschneide als Ellipsensegment auszubilden, da ein kreisförmiger Übergang eine erhöhte Schwierigkeit bei der Herstellung darstellen würde und bei Werkzeugen mit Freiflächen keine Rundanschnitte möglich sind. Eine Nebenschneidfase wird nicht erwähnt.

Ein gattungsähnliches Drehwerkzeug mit einer Messerplatte ist in der DE 34 04 005 C2 beschrieben. Die Messerplatte des Drehwerkzeugs weist eine zu einer Führungsschneide abgewinkelte Hauptschneide auf, wobei eine Spanleitstufe entlang der Neben- und Hauptschneide ausgebildet ist und sich in Richtung Hauptschneide verbreitert. Hierdurch sollen lange Späne ohne Stau aus der Bohrung abgeführt werden. Eine Gestaltung einer Nebenschneidfase wird nicht erwähnt.

In der DE 41 02 716 A1 ist eine Messerplatte für eine Einmesser-Reibahle bekannt, bei der eine Hauptschneide tangential in eine Nebenschneide übergeht. Spanleitstufen sind entlang der Nebenschneide ausgebildet und sind gegenüber der Längsachse des Werkzeugschaftes geneigt. Diese gehen im Bereich der Hauptschneide in eine Spanleitfläche über. Durch mehrere Spanleitstufen kann die Krümmung und Länge der anfallenden Späne beeinflusst werden. Es wird keine Gestaltung einer Nebenschneidfase dargestellt.

Die DE 203 19 341 U1 zeigt eine Reibahle mit einer Mehrzahl von Schneiden, die jeweils eine kopfseitige Haupt- und eine längsseitige Nebenschneide mit einer Nebenschneidfase aufweisen. Die Schneiden können einteilig mit dem Werkzeugkopf oder als Einsätze ausgebildet sein. Es wird gelehrt, dass eine einzelne Nebenschneidfase einer Schneide in einem vorderen Bereich eine größere Breite aufweist als die Breite einer Nebenschneidfase aller übrigen anderen Schneiden. Somit wird eine Nebenschneidenverbreiterung bezüglich einer einzelnen Schneide gegenüber allen anderen Schneiden vorgeschlagen, wobei der dadurch erzielte technische Effekt nur erreicht wird, da es Nebenschneiden mit einer größeren und einer kleinere Breite der Nebenschneidfasen gibt. Eine einheitliche Ausbildung aller Nebenschneidfasen wird gerade nicht gelehrt, auch weisen die Nebenschneidfasen abschnittsweise eine gleichbleibende Breite auf, wobei ein Breitenübergang weder unmittelbar am Kopfende, noch geometrisch besonders ausgestaltet ist.

Des Weiteren zeigt die DD 292 155 A eine Reibahle mit mindestens einer Messerplatte, die eine Führungsschneide und eine Hauptschneide aufweist, die gegeneinander abgewinkelt sind. Die Messerplatte wird mit einer Klemmpratze derart justiert gehalten, dass bei einer Feinbearbeitung von Bohrungen eine hohe Oberflächenqualität sowie eine exakte Maßhaltigkeit gewährleistet werden. Der Fokus liegt auf der Ausführung der Lagerung der Messerplatte mit dieser Klemmpratze.

In der EP 0 888 842 A1 wird ein Reibahlenwerkzeug zur Bearbeitung von Bohrungen, insbesondere Sacklochbohrung, offenbart, das einen sich verjüngenden Spanraumabschnitt aufweist.

Die DE 10 2008 027945 A1 offenbart eine gattungsgemäße Reibahle, wobei diese eine homogen ausgeformte, geradlinig Nebenschneidfase oder Freifläche entlang des Schneidkopfs aufweist.

In der US 2002/102141 A1 wird ein Verfahren zur Reibbehandlung einer Bohrungen mit einer Reibahle oder dergleichen offenbart, wobei die Reibahle mehrere Schneiden aufweist, die im Kopfbereich abgerundet ausgebildet sind, wobei eine Art Hauptschneide und Nebenschneide ausgebildet sind.

Nach dem vorbekannten Stand der Technik ergibt sich das Problem, das bereits in der DE 16 27 222 angesprochen ist, dass beim abgewinkelten oder beim abgerundeten Übergang zwischen Haupt- und Nebenschneide Vorschubriefen im Werkstück erzeugt werden, und der Reibvorgang keine ideal glatte Oberfläche erzeugt, da im Übergangsbereich zwischen Haupt- und Nebenschneide kein gleichmäßiger Reibkontakt gewährleistet werden kann. Des Weiteren können durch ein Abknicken von Haupt- und Nebenschneide erhöhte Kräfte am Werkzeugkopf auftreten, die zu einer verringerten Standzeit des Werkzeugs führen.

Ausgehend vom vorgenannten Stand der Technik ist es Aufgabe der Erfindung, ein Reibahlenwerkzeug zur Feinbearbeitung vorzuschlagen, das eine verbesserte Reibeigenschaft und eine erhöhte Standzeit aufweist.

Diese Aufgabe wird durch ein Reibahlenwerkzeug nach dem unabhängigen Anspruch 1 gelöst. Vorteilhafte Ausführungsformen sind Gegenstand der Unteransprüche.

### OFFENBARUNG DER ERFINDUNG

Gegenstand der Erfindung ist ein Reibahlenwerkzeug zur Feinbearbeitung von Bohrungen, das einen Werkzeugkopf und mindestens eine radial hervorstehende Schneidleiste umfasst. Die Schneidleiste trägt eine Hauptschneide und eine Nebenschneide, welche als eine Führungsfase ausgebildet ist, wobei die Hauptschneide abgewinkelt zur Nebenschneide ausgerichtet ist. Die Nebenschneide weist eine Nebenschneidfase, welche als eine Führungsfase ausgebildet ist, wobei die Führungsfase einem Radius einer Schneidbearbeitung des Reibahlenwerkzeugs folgt. Erfindungsgemäß wird vorgeschlagen, dass die Breite jeder Nebenschneidfase in axialer Richtung zur Stirnseite des Werkzeugkopfs hin im Abwinkelungsbereich von Nebenschneide zur Hauptschneide zunimmt. Dabei ist gemeint, dass alle am Reibahlenwerkzeug befindlichen Nebenschneidfasen eine kontinuierliche Verbreiterung in Richtung Werkzeugkopf aufweisen.

Mit anderen Worten wird ein Reibahlenwerkzeug vorgeschlagen, das eine Hauptschneide und eine Führungsschneide aufweist, die zueinander abgewinkelt sind. Die Abwinklung kann stetig gekrümmt oder abgewinkelt ausgeführt sein.

Die Führungsschneide weist eine Führungsfase auf, die dem Radius der Schneidbearbeitung des Reibahlenwerkzeugs folgt. Die Fase kann eine radial gekrümmte Fläche oder eine planare Fläche aufweisen, die tangential zur Kreisbahn des Reibahlenwerkzeugs ausgerichtet ist. Die Führungsfase weist im axialen Verlauf der Nebenschneide eine konstante Breite auf und verbreitert sich im Abwinkelungsbereich zur Hauptschneide hin. Durch die Verbreiterung der Führungsfase im Abwinkelungsbereich ergibt sich ein erhöhter Materialkontakt zwischen Werkstückoberfläche und Reibahlenschneide. Hierdurch kommt zusätzlich zur Schneidbearbeitung eine kontaktflächige Krafteinwirkung des Werkzeugkopfs auf die Oberfläche der zu bearbeitenden Stelle des Werkstücks. Dies erzeugt eine plastische Verformungsarbeit der zu bearbeitenden Bereiche im Übergangsbereich zwischen Hauptschneide und Nebenschneide. Hierdurch wird das Entstehen von Vorschubriefen verhindert und insbesondere bei schnelldrehenden Werkzeugen eine plastische Verformung des Werkstückmaterials anstelle eines Spanabtriebs geleistet. Im Abwinkelungsbereich zwischen Hauptschneide und Führungsschneide können durch die verbreiterte Führungsfase erhöhte Kräfte aufgenommen werden und die Standzeit des Werkzeugs verbessert werden. Die Verbreiterung der Führungsfase bewirkt eine plastische Verformung des Werkstücks und glättet die Werkstückoberfläche und drückt somit überstehendes Material beiseite, wobei zu einem geringeren Teil ein Schneidvorgang und zu einem erhöhten Teil ein Materialschiebevorgang stattfindet, so dass eine Reiboberfläche durch plastische Materialverformung erzeugt werden kann. Die Oberfläche des Werkstücks wird dadurch sehr glatt und typische Vorschubriefen werden verhindert.

Erfindungsgemäß ist die Nebenschneidfase im Abwinkelungsbereich in Richtung Stirnseite des Werkzeugkopfs in einem Aufweitungsbereich radial aufgeweitet, gekrümmt aufgeweitet oder linear aufgeweitet. Die Führungsfase weitet sich beim Übergang von Führungsschneide zur Hauptschneide somit auf, d.h. die Breite der Nebenschneidfase nimmt in Richtung Werkzeugkopf zu, wobei eine kontinuierliche Aufweitung, insbesondere durch einen radialen Verlauf der Breite der Führungsfase, ein gekrümmter, insbesondere parabolischer Verlauf, oder auch ein linearer Verlauf der Breitenzunahme der Führungsfase erreicht wird. Hierdurch ergibt sich ein erhöhter Materialkontakt zwischen Reibahlenwerkzeug und Werkstückoberfläche, so dass eine plastische Verformungsarbeit bereitgestellt werden kann.

In einer vorteilhaften Weiterbildung kann die Nebenschneide zumindest eine erste Freifläche aufweisen, deren Flächenbereite sich in axialer Richtung zum Werkzeugkopf hin im Abwinkelungsbereich verringert. Hierdurch wird erreicht, dass im Abwinkelungsbereich eine genügende Breite für den Aufweitungsbereich bereitgestellt wird, so dass eine Aufweitung der längsseitigen Nebenschneidfase erreicht werden kann und gleichzeitig ein spitzer oder planer Werkzeugkopf ausgebildet werden kann.

In einer vorteilhaften Weiterbildung kann der Aufweitungsbereich ausgehend von der Stirnseite des Werkzeugkopfs in einem Längenabschnitt der Gesamtlänge des Reibahlenwerkzeugs von weniger als 15%, insbesondere von weniger als 10% der Gesamtlänge, bevorzugt innerhalb von 5% der Gesamtlänge des Reibahlenwerkzeugs angeordnet sein. Besonders vorteilhaft schließt sich der Aufweitungsbereich unmittelbar an den Abwinkelungsbereich, d.h. dem Übergang von stirnseitiger Freifläche zur Seitenfläche des Reibahlenwerkzeugs an. Somit wird vorgeschlagen, dass die Nebenschneidfase sich auf einer relativ kurzen Strecke unmittelbar an der Stirnseite anschließend aufweitet, und der Aufweitungsbereich sich von der Stirnseite betrachtet direkt an dem Übergangsbereich der Freiflächen der Hauptschneide anschließt. Somit wird eine Verbreiterung der Nebenschneidfase nahe der Stirnseite vorgeschlagen, so dass nur in einem geringen Längenabschnittsbereich der Stirnseite eine Verdrängungswirkung bewirkt wird, und der rückwärtige Teil des Werkzeugkopfs keine Verdrängungswirkung aufweist. Dabei kann ausgehend von der Stirnseite anschließend zu einer der Freifläche der Hauptschneide eine sofortige Verjüngung der Nebenschneidfase erfolgen, so dass die Verdrängungswirkung nur in einem eng begrenzten Längenabschnitt erfolgt.

In einer vorteilhaften Weiterbildung kann der Werkzeugkopf in Richtung Werkzeugschaft radial verjüngt sein, insbesondere konisch oder andersartig radial verringert sein. Somit wird ein Werkzeugkopf des Reibahlenwerkzeugs vorgeschlagen, der seine höchste radiale Ausdehnung am Übergangsbereich zwischen Hauptschneide und Führungsschneide aufweist, und in diesem Bereich die Führungsfase verbreitert ausgebildet ist. Hierdurch wird im Bereich der höchsten radialen Ausdehnung ein großflächiger Kontaktbereich zwischen Reibahlenwerkzeug und Werkstück gewährleistet, so dass eine besonders gute Reibwirkung des Reibahlenwerkzeugs erreicht werden kann.

In einer vorteilhaften Weiterbildung kann zumindest ein Kühlkanal, insbesondere ein axial verlaufender Kühlkanal, vorgesehen sein, so dass eine Sacklochbohrung im Werkstück kühlend bearbeitbar ist, wobei der Werkzeugkopf in Richtung Stirnseite konisch verjüngt ist. In dieser Weiterbildung wird ein Reibahlenwerkzeug für eine Sacklochbearbeitung vorgeschlagen, das zumindest einen axial verlaufenden Kühlkanal aufweist, und somit eine hohe Kühlwirkung des Werkzeugkopfs des zu bearbeitenden Bereichs bereitstellt. Dabei kann es vorteilhaft sein, den Werkzeugkopf in Richtung Stirnseite im Wesentlichen planar auszubilden, um somit eine glatte Oberfläche des Sacklochbodens herstellen zu können.

Alternativ hierzu kann insbesondere für die Bearbeitung von Durchgangsbohrungen der Werkzeugkopf in Richtung Stirnseite konisch verjüngt und insbesondere spitz zulaufend ausgebildet sein. Hierdurch ergibt sich eine definierte Spitze des Werkzeugkopfs und eine daran radial aufweitende Form, so dass Sacklochbohrungen aufgeweitet werden können, und an der radial maximalen Ausdehnung des Werkzeugkopfs eine erhöhte Reibwirkung durch eine größere Kontaktfläche zwischen Schneidleiste des Reibahlenwerkzeugs und Werkstückoberfläche aufgrund der verbreiterten Führungsfase bereitgestellt werden kann.

In einer vorteilhaften Ausführungsform kann der Werkzeugkopf eine Mehrzahl von Schneidleisten umfassen, von denen mindestens eine Schneidleiste als Hauptschneidleiste mit erhöhter Leistenbreite und zumindest eine Schneidleiste als Nebenschneidleiste mit verringerter Schneidleistenbreite ausgebildet ist. So kann beispielsweise ein Reibahlenwerkzeugkopf mit zwei Hauptschneidleisten und vier Nebenschneidleisten ausgebildet sein, bei denen zumindest die Hauptschneidleisten eine Führungsfase mit einer verbreiterten Form im Abwinkelungsbereich zur Hauptschneide aufweist. Dabei kann es vorteilhaft sein, dass die Hauptschneidleiste eine verbreiterte Führungsfase der Führungsschneide aufweist, während die Nebenschneide beispielsweise keine Führungsfase aufweist. Insbesondere können die Nebenschneidleisten als reine Führungsleisten ausgebildet sein, die keinerlei Schneidwirkung besitzen. Die Nebenschneide, die auch als Führungsschneide bezeichnet wird, weist in der Regel eine erste Freifläche auf. Bevorzugt kann diese eine zweite Freifläche aufweisen, insbesondere kann die Hauptschneidleiste eine Nebenschneide mit einer zweiten Führungsfläche aufweisen, um die Leistenbreite zu erhöhen und eine vergrößerte Standzeit und verbesserte Kühlwirkung des Werkzeugkopfs zu erreichen. Sind sowohl Haupt- als auch Nebenschneidleisten vorgesehen, so kann vorteilhaft die Nebenschneidleiste als reine Führungsleiste ausgeführt sein und deren Nebenschneide keine Führungsfase aufweisen. Somit unterscheiden sich Haupt- und Nebenschneidleisten deutlich und die Nebenschneidleisten dienen vorzugsweise als reine Führungsleiste zur Gewährleistung einer verbesserten Führung des Reibahlenwerkzeugs während des Bearbeitungsvorgangs.

### ZEICHNUNGEN

Weitere Vorteile ergeben sich aus den vorliegenden Zeichnungen und der Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine Ausführungsform eines Reibahlenwerkzeugs für eine Durchgangslochbearbeitung,
- **Fig. 2**: perspektivisch eine Schneidleiste des in der Fig. 1 dargestellten Reibahlenkopfs,
- **Fig. 3**: ein perspektivischer Teilausschnitt eines Werkzeugkopfs für ein Reibahlenwerkzeug für eine Sacklochbearbeitung mit einer Schneidleiste gemäß einer Ausführungsform der Erfindung,
- **Fig. 4**: eine Detaildarstellung einer weiteren Schneidleiste gemäß einer Ausführungsform der Erfindung,
- **Fig. 5**: perspektivisch eine weitere Detaildarstellung einer Schneidleiste eines erfindungsgemäßen Reibahlenwerkzeugs,
- **Fig. 6**: in einer weiteren Detaildarstellung eine Schneidleiste eines Reibahlenwerkzeugs gemäß der Erfindung,
- **Fig. 7**: eine weitere perspektivische Detaildarstellung einer Schneidleiste eines Reibahlenwerkzeugs für eine Sacklochbearbeitung gemäß der Erfindung,
- **Fig. 8**: ein Schnitt durch eine Schneidleiste eines erfindungsgemäßen Reibahlenwerkzeugs.

In den Figuren sind gleiche oder gleichartige Komponenten mit gleichen Bezugszeichen beziffert.

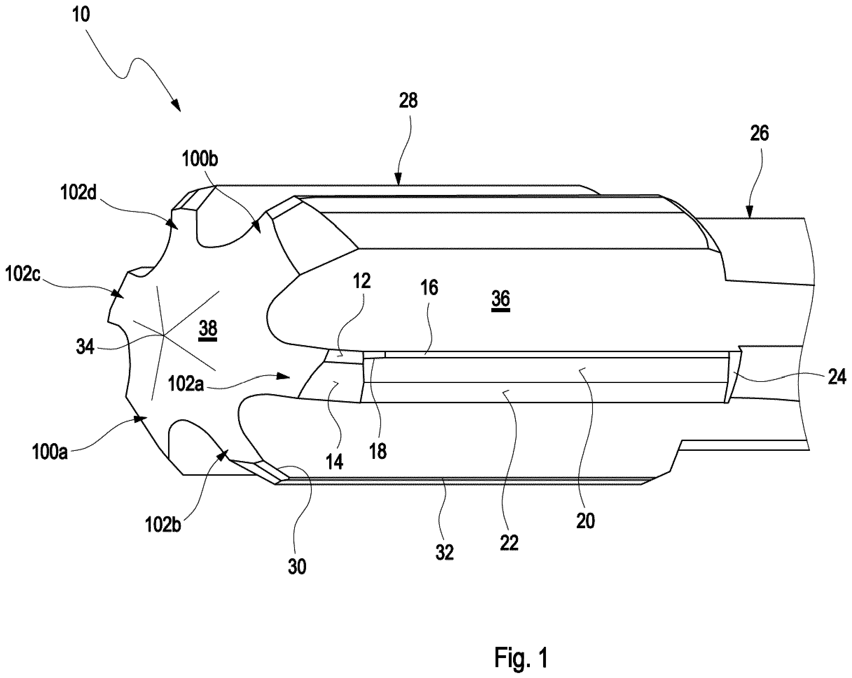

Fig. 1 zeigt in einer perspektivischen Darstellung einen Werkzeugkopf einer Reibahle gemäß einer ersten Ausführungsform der Erfindung. Die Reibahle 10 weist einen Werkzeugkopf 28 auf, an der sich ein Spanführungsbereich 26 anschließt, wobei nicht dargestellt ein Schaft eines Werkzeugs eine Ankopplung an eine Werkzeugbearbeitungsmaschine ermöglicht. Der Werkzeugkopf 28 trägt sechs Schneidleisten, wobei zwei Schneidleisten 100A und 100B als Hauptschneidleisten mit einer erhöhten Breite der Schneidleiste ausgeformt sind und vier Nebenschneidleisten 102A, 102B, 102C und 102D ausgeformt sind, die eine verringerte Breite der Schneidleiste aufweisen. Gleichwohl können alle Schneidleisten auch identisch ausgebildet sein. Zwischen den Schneidleisten 100, 102 sind Spanführungsbereiche ausgeformt, um Späne rückwärtig abzuführen.

Das Reibahlenwerkzeug 10 ist für eine Durchgangslochbearbeitung eines Werkstücks vorgesehen, und weist aus diesem Grund keine Kühlmittelführungskanäle auf. Bei Durchgangslochbohrungen können von der offenen Seite des Durchgangslochs entsprechendes Kühlmittel an den Arbeitsbereich eingeführt werden. Jede Schneidleiste 100, 102 weist eine Hauptschneide 30 auf, die auf einem konisch zulaufenden Stirnbereich 34 der Stirnseite 38 des Werkzeugkopfs 28 angeordnet ist. Die Hauptschneide 30 ist als Kante einer ersten Freifläche 12 zum Spanführungsbereich ausgebildet und weist axial versetzt eine zweite Freifläche 14 der Hauptschneide auf. Die Hauptschneide 30 geht abgewinkelt in eine parallel zur Drehachse verlaufende Führungsschneide 32 über, die wiederum als Kante vom Spanführungsbereich zur Leistenoberfläche ausgebildet ist. Die Führungsschneide 32 weist eine erste Freifläche 20 und eine daran anschließende weiterhin abgewinkelte zweite Freifläche 22 auf. Die Führungsschneide 32 weist eine Führungsfase 16 auf, deren Oberfläche dem Drehradius 70 des Werkzeugs folgend gleichartig zum Schneidkreis 70 des Werkzeugs ausgebildet sein kann, oder deren Oberfläche planar ausgebildet sein kann, um tangential den Drehumfang des Werkzeugkopfs zu schneiden. Die Führungsfase 16 bildet den Oberflächenbereich des Reibahlenwerkzeugs 10, der bei der Schneidbearbeitung in flächigem Materialkontakt mit der Oberfläche des Werkstücks kommt. Die Führungsfase 16 weist entlang der Führungsschneide 32 eine konstante Breite auf, wobei die Breite sich im Abwinkelungsbereich zur Hauptschneide 30 aufweitet, und einen Aufweitungsbereich 18 ausbildet. Die Aufweitung 18 kann als gekrümmter Radius eines Kreisabschnitts ausgeformt sein, und erstreckt sich in Richtung der ersten Freifläche 20, deren Breite entsprechend verkleinert am Abwinkelungsbereich 18 ausgebildet ist. Die Aufweitung kann auch linear ausgebildet sein oder parabolisch die Breite der Führungsfase erhöhen. Durch den verbreiterten Oberflächenbereich der Führungsfase 16 im Aufweitungsbereich 18 folgt eine Verdrängung des Werkstückmaterials durch eine plastische Verformung, so dass eine Schneidbearbeitung in den Hintergrund rückt und eine plastische Verformungsarbeit das Werkstückmaterial an dieser Stelle glättet. Der Aufweitungsbereich 18 befindet sich am radial maximalen Umfang des Reibahlenwerkzeugs 10 und übt in diesem Bereich eine plastische Verformungsarbeit auf die Materialoberfläche aus. Der Werkzeugkopf 28 kann bevorzugt in Richtung Werkzeugschaft verjüngt sein, so dass der Aufweitungsbereich den maximalen Werkzeugkopfradius 70 einschließt.

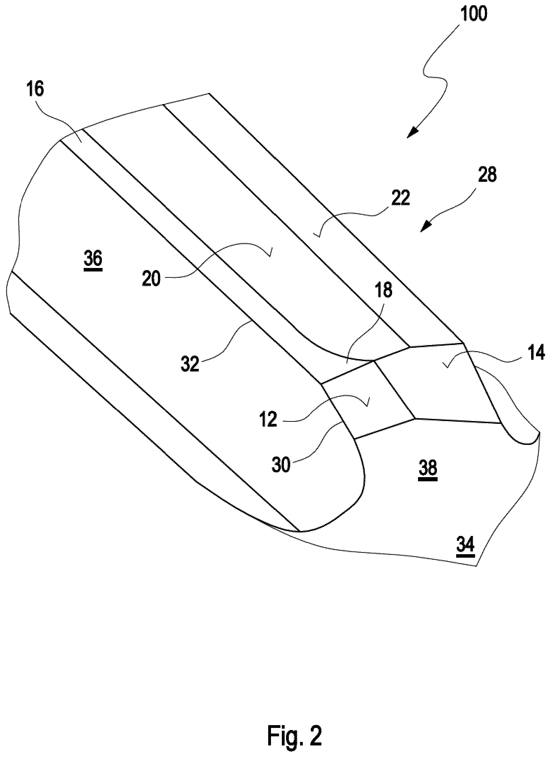

In der Fig. 2 ist eine perspektive Teilansicht einer Hauptschneidleiste 100 der Fig. 1 der Aufweitungsbereich 18 der Führungsfase 16 dargestellt. Die Hauptschneide 30 wird von einer ersten Freifläche 12 und einer zweiten Freifläche 14 begrenzt. Sie ist an einem konisch verlaufenden Stirnbereich 34 der Stirnseite 38 des Werkzeugkopfs 28 angeordnet. Die Führungsschneide 32 umfasst die Führungsfase 16, die sich im Aufweitungsbereich 18 in Richtung Hauptschneide 30 radial aufweitet. An die Führungsfase 16 schließen sich eine erste Freifläche 20 und eine zweite Freifläche 22 der Führungsschneide 32 an.

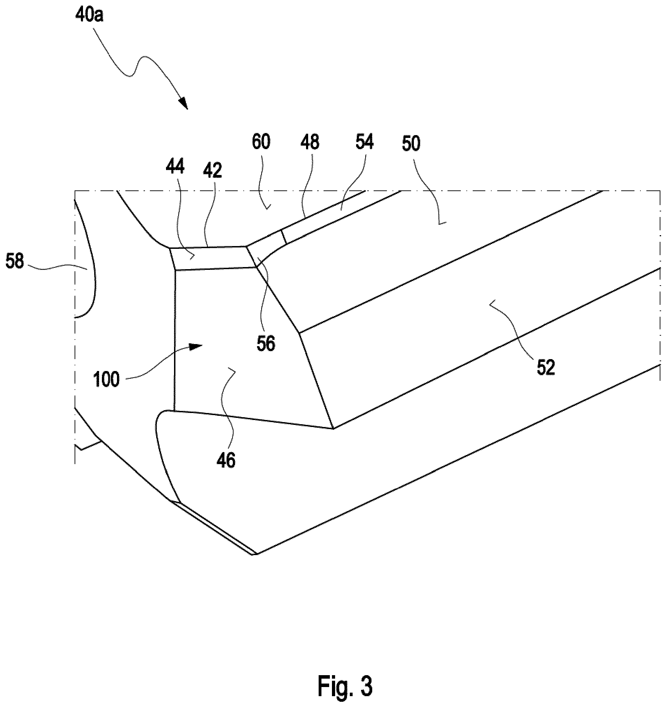

In der Fig. 3 ist ein perspektivischer Teilausschnitt eines weiteren Reibahlenwerkzeugs 40a für eine Sacklochbohrbearbeitung dargestellt. Das Reibahlenwerkzeug 40a umfasst mehrere Schneidleisten 100, wobei lediglich eine Hauptschneidleiste 100 dargestellt ist. Ansatzweise erkennt man den Ausgang eines Kühlkanals 58, der achszentrisch im Werkzeug 40a verläuft, und bei Bearbeitung einer Sacklochbohrung für einen Zufluss von Kühlmittel sorgen kann. Die Schneidleiste 100 weist eine Hauptschneide 42 auf, an der sich eine erste Freifläche 44 und eine zweite Freifläche 46 anschließt, die axial zurückversetzt zur Hauptschneide 42 ausgebildet sind. In einem 90°-Winkel geht die Hauptschneide 42 in die Führungsschneide 48 über, wobei sich an der Führungsschneide 48 eine erste, radial nach innen versetzte Freifläche 50 und eine weiterhin radial nach innen versetzte zweite Freifläche 52 anschließt. Die Führungsschneide 48 weist eine Führungsfase 54 auf, die planbar ausgebildet ist, und einen tangentialen Verlauf zum Drehradius 70 des Werkzeugs 40 definiert. Die Führungsfase 54 kann gleichwohl auch radial gekrümmt dem Drehradius 70 des Werkzeugs 40 folgen. Die Führungsfase 54 ist in einem Aufweitungsführungsbereich 56 beim Übergang zur Hauptschneide 42 verbreitert, und verringert somit die Breite der ersten Freifläche 50. Die Verbreiterung kann entweder kreisbogenförmig erfolgen, aber auch linear oder beispielsweise parabolisch eine Verbreiterung der Führungsfase 54 bewirken. Eine Spanführungsfläche 60 bildet an der Schneidkantenseite die Begrenzung der Schneidleiste 100.

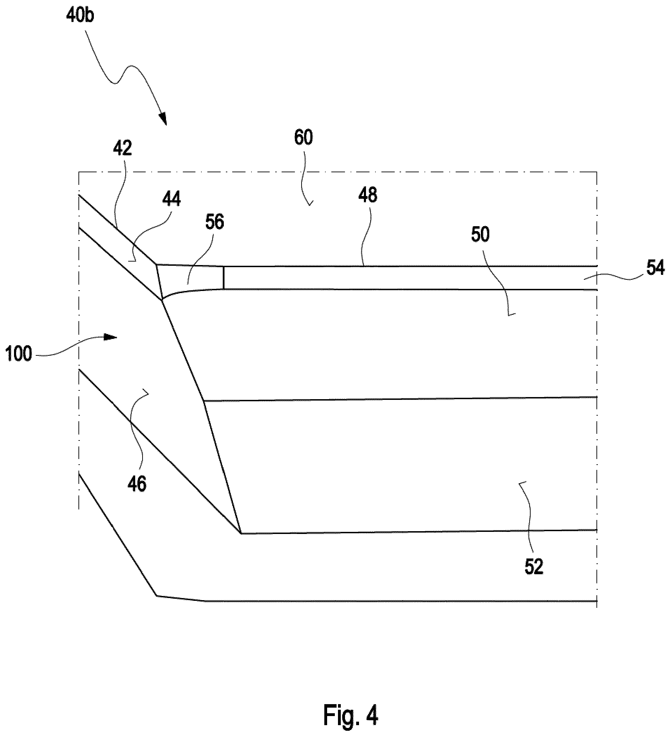

In der Fig. 4 ist eine weitere Teilansicht einer Schneidleiste 100 eines Reibahlenwerkzeugs 40b für eine Sacklochbearbeitung dargestellt. Im Detail erkennt man die radiale Aufweitung der Führungsfase 54 im Aufweitungsbereich 56 beim Übergang zur Hauptschneide 42.

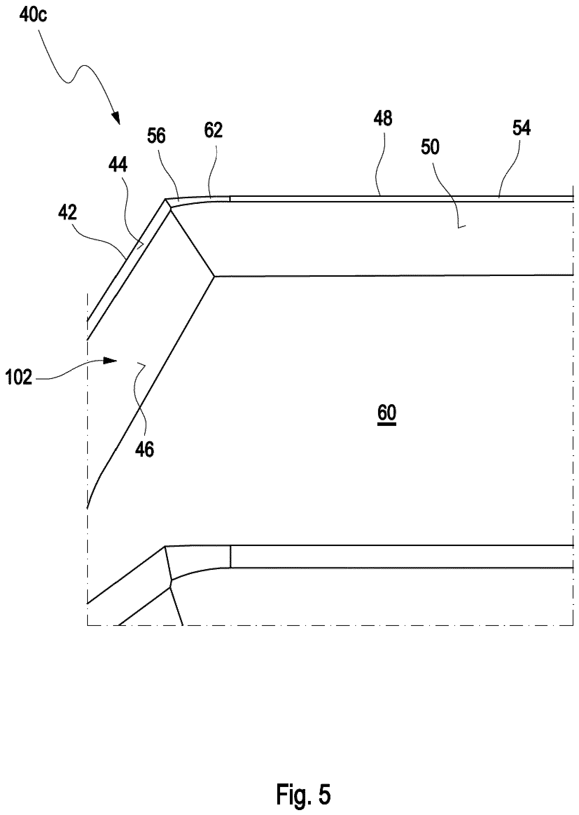

In der Fig. 5 ist eine weitere Ausführungsform einer Schneidleiste 102 für eine Sacklochreibahle 40c dargestellt. Hierbei ist am Werkzeugkopf eine Nebenschneidleiste 102 vorgesehen, deren Führungsschneide 48 nur eine einzelne Freifläche 50 aufweist. Am Aufweitungsbereich 56 beim Übergang der Führungsschneide 48 zur Hauptschneide 42 ist die Führungsfase 54 radial aufgeweitet und bildet den Aufweitungsbereich 56 aus. Des Weiteren ist die Führungsschneide 48 radial in Richtung erste Freifläche 50 geringfügig gekrümmt, und neigt sich somit Richtung Hauptschneide 42.

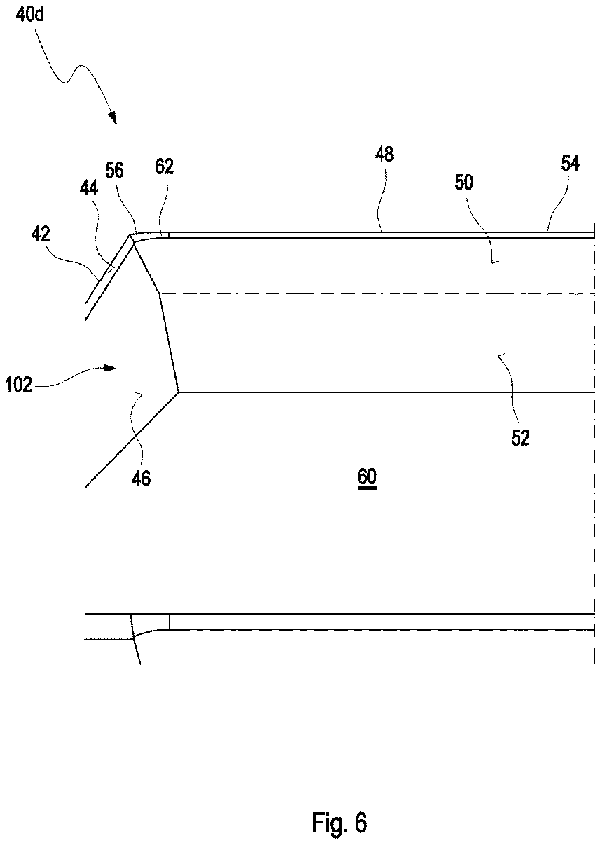

In der Fig. 6 ist eine weitere Ausführungsform einer Sacklochreibahle 40d dargestellt, in deren Gegensatz zur Darstellung in Fig. 5 die Nebenschneidleiste 102 eine erste und eine zweite Führungsleiste 50, 52 aufweist. Im Aufweitungsbereich 56 ist die Führungsschneide 48 in Richtung der Hauptschneide 42 geneigt, wobei die Führungsfase 54 radial aufgeweitet ist und somit die erste Freifläche 50 im Abwinkelungsbereich um den Aufweitungsbereich 56 verkleinert ist.

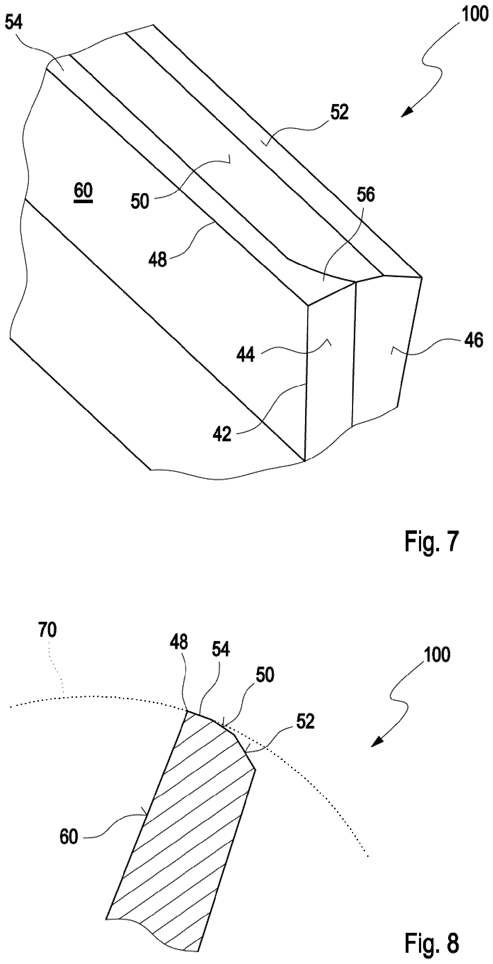

In der Fig. 7 ist perspektivisch eine Hauptschneidleiste 100 einer Ausführungsform einer Reibahle gemäß einer der Fig. 3 bis 6 dargestellt. Die Schneidleiste umfasst eine Spanführungsfläche 60 sowie eine Hauptschneide 42 und eine Führungsschneide 48. An die Führungsschneide 48 schließt sich eine erste abgewinkelte und radial nach innen versetzte Führungsfläche 50 und eine zweite Freifläche 52 an. Die Hauptschneide 42 weist ebenfalls eine erste axial nach hinten versetzte Freifläche 44 und eine zweite weiterhin axial nach hinten versetzte Freifläche 46 auf. Die Führungsschneide 48 weist eine planar ausgebildete Führungsfase 54 auf, die am Übergangsbereich zur Hauptschneide 42 radial aufgeweitet ist und den Aufweitungsbereich 56 ausbildet. Im Aufweitungsbereich 56 findet eine plastische Verformungsarbeit statt, somit werden unerwünschte Riefenbildungen verhindert.

Fig. 8 zeigt ein Schnittbild durch eine Schneidleiste einer Ausführungsform eines erfindungsgemäßen Reibahlenwerkzeugs 10, 40. Die Schneidleiste 100 weist eine Spanführungsfläche 60 sowie eine Führungsschneide 48 auf. Die Führungsschneide 48 beschreibt in ihrer radial maximalen Ausdehnung des Reibahlenwerkzeugs einen Drehradius 70, zu dem tangential eine Führungsfase 54 als planar ausgebildete Führungsfase ausgeformt ist. Diese liegt stoffschlüssig an dem zu bearbeitenden Werkstückmaterial an, so dass nicht nur eine Schneidarbeit, sondern auch eine plastische Verformarbeit des Werkstücks erfolgen kann. Daran schließt sich radial nach innen versetzt eine erste Freifläche 50 und eine zweite Freifläche 52 an.

### BEZUGSZEICHENLISTE

- 10: Reibahlenwerkzeug, Reibahle für Durchgangslochbearbeitung
- 12: Erste Freifläche der Hauptschneide
- 14: Zweite Freifläche der Hauptschneide
- 16: Führungsfase, Nebenschneidfase
- 18: Aufweitungsbereich der Führungsfase
- 20: Erste Freifläche der Nebenschneide
- 22: Zweite Freifläche der Nebenschneide
- 24: Rückzugsfase
- 26: Führungsbereich
- 28: Werkzeugkopf
- 30: Hauptschneide
- 32: Führungsschneide, Nebenschneide
- 34: stirnseitiger Verjüngungsbereich der Reibahlenkopfs
- 36: Spanführungsfläche
- 38: Stirnseite des Werkzeugkopfs

- 40: Reibahlenwerkzeug, Reibahle für Sachlochbearbeitung
- 42: Hauptschneide
- 44: Erste Freifläche der Hauptschneide
- 46: Zweite Freifläche der Hauptschneide
- 48: Führungsschneide, Nebenschneide
- 50: Erste Freifläche der Nebenschneide
- 52: Zweite Freifläche der Nebenschneide
- 54: Führungsfase, Nebenschneidfase
- 56: Aufweitungsbereich der Führungsfase
- 58: Kühlkanal
- 60: Spanführungsfläche
- 62: Radiale Krümmung der Führungsfase

- 70: Radius des Reibahlenwerkzeugs

- 100: Hauptschneidleiste
- 102: Nebenschneidleiste

## Patentansprüche

1. Reibahlenwerkzeug (10) zur Feinbearbeitung von Bohrungen, aufweisend einen Werkzeugkopf (28) mit mindestens einer radial hervorstehenden Schneidleiste (100, 102), die jeweils eine Hauptschneide (30, 42) und eine Nebenschneide (32, 48), welche als eine Führungsschneide ausgebildet ist, umfassen, wobei jede Hauptschneide (30, 42) abgewinkelt zur Nebenschneide (32, 48) ausgerichtet ist und jede Nebenschneide (32, 48) eine Nebenschneidfase (16, 54), welche als eine Führungsfase ausgebildet ist, aufweist, wobei die Führungsfase einem Radius einer Schneidbearbeitung des Reibahlenwerkzeugs (10) folgt, **dadurch gekennzeichnet, dass** die Breite jeder Nebenschneidfase (16, 54) in axialer Richtung zur Stirnseite des Werkzeugkopfs (28) hin im Abwinkelungsbereich von Nebenschneide (32, 48) zur Hauptschneide (30, 42) zunimmt und im Abwinkelungsbereich in Richtung Stirnseite des Werkzeugkopfs (28) in einem Aufweitungsbereich (18, 56) kontinuierlich, insbesondere radial, gekrümmt, linear oder parabolisch, aufgeweitet ist.

2. Reibahlenwerkzeug (10) nach Anspruch 1, **dadurch gekennzeichnet, dass** die Nebenschneide (32, 48) zumindest eine erste Freifläche (20, 50) aufweist, deren Flächenbereite sich in axialer Richtung zum Werkzeugkopf (28) hin im Abwinkelungsbereich verringert.

3. Reibahlenwerkzeug (10) nach Anspruch 1 oder 2, **dadurch gekennzeichnet, dass** der Aufweitungsbereich (18, 56) ausgehend von der Stirnseite des Werkzeugkopfs (28) in einem Längenabschnitt der Gesamtlänge des Reibahlenwerkzeugs (10) von weniger als 15%, insbesondere von weniger als 10% der Gesamtlänge, bevorzugt innerhalb von 5% der Gesamtlänge des Reibahlenwerkzeugs (10) angeordnet ist, insbesondere dass der Aufweitungsbereich (18, 56) sich unmittelbar an einen Übergang der ersten stirnseitigen Freifläche (20, 50) zur Seitenfläche des Reibahlenwerkzeugs (10) anschließt.

4. Reibahlenwerkzeug (10) nach einem der vorgenannten Ansprüche, **dadurch gekennzeichnet, dass** der Werkzeugkopf (28) in Richtung Werkzeugschaft radial verjüngt ist.

5. Reibahlenwerkzeug (10) nach einem der vorgenannten Ansprüche, **dadurch gekennzeichnet, dass** zumindest ein Kühlkanal (58), insbesondere ein axial verlaufender Kühlkanal, vorgesehen ist, so dass eine Sacklochbohrung kühlend bearbeitbar ist, wobei der Werkzeugkopf (28) in Richtung Stirnseite im Wesentlichen Planar zur Bearbeitung einer Durchgangsbohrung ausgebildet ist.

6. Reibahlenwerkzeug (10) nach einem der vorgenannten Ansprüche 1 bis 4, **dadurch gekennzeichnet, dass** der Werkzeugkopf (28) in Richtung Stirnseite konisch verjüngt ist.

7. Reibahlenwerkzeug (10) nach einem der vorgenannten Ansprüche, **dadurch gekennzeichnet, dass** der Werkzeugkopf (28) eine Mehrzahl von Schneidleisten (100, 102) umfasst, von denen zumindest eine Schneidleiste als Hauptschneidleiste (100) mit erhöhter Leistenbreite und zumindest eine Schneidleiste als Nebenschneidleiste (102) mit verringerter Leistenbreite ausgebildet ist.

8. Reibahlenwerkzeug (10) nach einem der vorgenannten Ansprüche, **dadurch gekennzeichnet, dass** die Nebenschneide (32, 48), insbesondere die Nebenschneide (32,48) einer Hauptschneidleiste (1 00), eine zweite Freifläche (22, 52) aufweist.

## Claims

1. Reamer tool (10) for precision machining of boreholes, including a tool head (28) having at least one radially projecting cutting bar (100, 102) each comprising a primary cutting edge (30, 42) and a secondary cutting edge (32, 48), which is formed as a guide cutting edge, each primary cutting edge (30, 42) being oriented at an angle with respect to the secondary cutting edge (32, 48), and each secondary cutting edge (32, 48) having a secondary cutting chamfer (16, 54) which is designed as a guide chamfer, the guide chamfer following a radius of a machining operation by the reamer tool (10), **characterized in that** the width of each secondary cutting chamfer (16, 54) increases in the axial direction towards the front face of the tool head (28) in the angled region from the secondary cutting edge (32, 48) towards the primary cutting edge (30, 42) and is continuously widened, in particular in a radial, curved, linear or parabolic fashion, in a widening region (18, 56) in the angled region in the direction of the front face of the tool head (28).

2. Reamer tool (10) according to claim 1, **characterized in that** the secondary cutting edge (32, 48) has at least one first flank surface (20, 50), the surface width of which decreasing in the axial direction towards the tool head (28) in the angled region.

3. Reamer tool (10) according to claim 1 or 2, **characterized in that** the widening region (18, 56), starting from the front face of the tool head (28), is arranged in a length section of the total length of the reamer tool (10) of less than 15%, in particular of less than 10% of the total length, preferably within 5% of the total length of the reamer tool (10), in particular **in that** the widening region (18, 56) directly adjoins a transition zone from the first frontal flank surface (20, 50) to the side surface of the reamer tool (10).

4. Reamer tool (10) according to one of the preceding claims, **characterized in that** the tool head (28) is radially tapered in the direction of the tool shank.

5. Reamer tool (10) according to one of the preceding claims, **characterized in that** at least one cooling channel (58), in particular an axially extending cooling channel, is provided so that a blind-end bore can be machined with cooling, the tool head (28) being designed to be essentially planar in the direction of the front face to allow machining of a throughbore.

6. Reamer tool (10) according to one of the preceding claims 1 to 4, **characterized in that** the tool head (28) is conically tapered in the direction of the front face.

7. Reamer tool (10) according to one of the preceding claims, **characterized in that** the tool head (28) comprises a plurality of cutting bars (100, 102), of which at least one cutting bar is designed as a primary cutting bar (100) with increased bar width and at least one cutting bar is designed as a secondary cutting bar (102) with reduced bar width.

8. Reamer tool (10) according to one of the preceding claims, **characterized in that** the secondary cutting edge (32, 48), in particular the secondary cutting edge (32, 48) of a primary cutting bar (100), has a second flank surface (22, 52).

## Revendications

1. Outil d'alésage (10) pour l'usinage de précision de trous de forage, comprenant une tête d'outil (28) avec au moins une barre de coupe (100, 102) faisant saillie radialement, présentant respectivement une arête de coupe primaire (30, 42) et une arête de coupe secondaire (32, 48), qui est conçue comme arête de coupe de guidage, chaque arête de coupe primaire (30, 42) étant orientée sous un angle par rapport à l'arête de coupe secondaire (32, 48) et chaque arête de coupe secondaire (32, 48) présentant un chanfrein de coupe secondaire (16, 54) qui est conçu comme un chanfrein de guidage, le chanfrein de guidage suivant un rayon d'opération d'usinage par l'outil d'alésage (10), **caractérisé en ce que** la largeur de chaque chanfrein de coupe secondaire (16, 54) augmente en direction axiale vers la face frontale de la tête d'outil (28) dans la zone angulaire de l'arête de coupe secondaire (32, 48) à l'arête de coupe primaire (30, 42) et est élargie en continu, en particulier de manière radiale, courbé, linéaire ou parabolique, dans une zone d'élargissement (18, 56) dans la zone angulaire vers la face frontale de la tête d'outil (28).

2. Outil d'alésage (10) selon la revendication 1, **caractérisé en ce que** l'arête de coupe secondaire (32, 48) présente au moins une première surface de flanc (20, 50), dont la largeur de surface diminue dans la direction axiale vers la tête d'outil (28) dans la zone angulaire.

3. Outil d'alésage (10) selon la revendication 1 ou 2, **caractérisé en ce que** la zone d'élargissement (18, 56), partant de la face frontale de la tête d'outil (28), est disposée dans une section longitudinale de la longueur totale de l'outil d'alésage (10) inférieure à 15%, en particulier de moins de 10 % de la longueur totale, de préférence dans les 5 % de la longueur totale de l'outil d'alésage (10), notamment **en ce que** la zone d'élargissement (18, 56) jouxte directement une zone de transition entre la première surface de flanc de la face frontale (20, 50) et la surface latérale de l'outil d'alésage (10).

4. Outil d'alésage (10) selon l'une des revendications précédentes, **caractérisé en ce que** la tête d'outil (28) est effilée de façon radiale en direction de la tige d'outil.

5. Outil d'alésage (10) selon l'une des revendications précédentes, **caractérisé en ce qu'**il est prévu au moins un canal de refroidissement (58), en particulier un canal de refroidissement s'étendant axialement, de sorte qu'un alésage borgne peut être usiné avec refroidissement, la tête d'outil (28) étant réalisée sensiblement plane en direction de la face frontale pour permettre l'usinage d'un alésage traversant.

6. Outil d'alésage (10) selon l'une des revendications précédentes 1 à 4, **caractérisé en ce que** la tête d'outil (28) est effilée de façon conique en direction de la face frontale.

7. Outil d'alésage (10) selon l'une des revendications précédentes, **caractérisé en ce que** la tête d'outil (28) comprend une pluralité de barres de coupe (100, 102), dont au moins une barre de coupe est conçue comme barre de coupe primaire (100) avec une largeur de barre accrue et au moins une barre de coupe est conçue comme barre de coupe secondaire (102) avec une largeur de barre réduite.

8. Outil d'alésage (10) selon l'une des revendications précédentes, **caractérisé en ce que** l'arête de coupe secondaire (32, 48), en particulier l'arête de coupe secondaire (32, 48) d'une barre de coupe primaire (100), présente une deuxième surface de flanc (22, 52).
